(19) **Europäisches Patentamt / European Patent Office / Office européen des brevets**

(11) **EP 2 784 849 A1**

(12) # EUROPEAN PATENT APPLICATION
published in accordance with Art. 153(4) EPC

(43) Date of publication:
**01.10.2014 Bulletin 2014/40**

(21) Application number: **12852096.2**

(22) Date of filing: **19.11.2012**

(51) Int Cl.:
*H01M 4/38* [(2006.01)]   *H01M 4/36* [(2006.01)]
*H01M 10/052* [(2010.01)]   *H01M 10/0562* [(2010.01)]

(86) International application number:
**PCT/JP2012/007408**

(87) International publication number:
**WO 2013/076955 (30.05.2013 Gazette 2013/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2011   JP 2011255756**

(71) Applicant: **Idemitsu Kosan Co., Ltd
Tokyo 100-8321 (JP)**

(72) Inventors:
• **TSUJI, Akiko
Chiba 299-0293 (JP)**

• **NAKAGAWA, Masaru
Chiba 299-0293 (JP)**
• **KOSHIKA, Hiromichi
Chiba 299-0293 (JP)**

(74) Representative: **Clarke, Lionel Paul
Gill Jennings & Every LLP
The Broadgate Tower
20 Primrose Street
London EC2A 2ES (GB)**

(54) **ELECTRODE MATERIAL AND LITHIUM ION BATTERY USING SAME**

(57)   An electrode material including at least one of sulfur and a compound that contains a sulfur atom, a conductive material, and a solid electrolyte that contains a lithium atom, a phosphorous atom and a sulfur atom, wherein the solid electrolyte has at least one of a peak at $86.1 \pm 0.6$ ppm and a peak at $83.0 \pm 1.0$ ppm in the solid $^{31}$PNMR spectrum, and the ratio of the phosphorous atoms contained in the peak is 62 mol% or more relative to the phosphorous atoms contained in the all peaks.

EP 2 784 849 A1

**Description**

Technical Field

The invention relates to an electrode material and a lithium ion battery using the same.

Background Art

In currently-available lithium ion batteries, an organic electrolyte solution is mainly used as an electrolyte. However, although the organic electrolyte solution shows a high ionic conductivity, since the electrolyte solution is a flammable liquid, there is a concern of occurrence of leakage, ignition or the like.

Taking such concern into consideration, development of a solid electrolyte having a higher degree of safety is expected as an electrolyte for a next-generation lithium ion battery.

As a battery free from the fear of leakage, ignition or the like, an all-solid lithium battery that is obtained by using a sulfide-based solid electrolyte containing a sulfur element, a lithium element and a phosphorus element as main components has been studied.

It is general to use lithium cobaltate ($LiCoO_2$:LCO) in a positive electrode and carbon in a negative electrode of this all-total solid lithium battery (Patent Document 1). However, a positive electrode active material such as LCO has a low electric capacity and hence, it is impossible to realize a high-capacity all-solid lithium battery.

In order to enhance the electric capacity of an all-solid lithium battery, a method has been studied in which sulfur having a theoretic capacity of 1672 mAh/g is used in a positive electrode. Since sulfur has a poor electric conductivity, it is required to ensure conductivity by any method when sulfur is used in a positive electrode.

In order to ensure conductivity of sulfur, a method in which fine pores of carbon is impregnated by vacuum heating with sulfur is proposed (Patent Document 2). An all-solid lithium battery in which a positive electrode material obtained by mixing a sulfur-carbon composite obtained by this method with thio-LISICON ($Li_{3.25}Ge_{0.25}P_{0.75}S_4$), and a solid electrolyte comprising the same thio-LISICON ($Li_{3.25}Ge_{0.25}P_{0.75}S_4$) is disclosed. The ionic conductivity of thio-LISICON is about $10^{-3}$S/cm. It is supposed that this technology is aimed at realizing a high-capacity all-solid lithium battery by using sulfur having a high theoretical capacity, carbon for ensuring conductivity and a positive electrode formed of thio-LISICON having a high ionic conductivity.

That is, a defect that, if the ionic conductivity of a solid electrolyte is not high, the speed of ion conductance in the electrode becomes slow, resulting in poor battery performance is prevented by using thio-LISICON having a high ionic conductivity. However, there is a still defect that, since thio-LISICON contains Ge, the raw material cost is high, and since the production method involves a quenching method, the production cost is high. There is also a disadvantage that the battery performance is not excellent.

As the solid electrolyte which can be produced at a low raw material cost and at a low production cost and has a high ionic conductivity, a solid electrolyte having a $Li_7P_3S_{11}$ crystal structure can be mentioned (see Patent Document 3, for example), The solid electrolyte has a defect that the amount of hydrogen sulfide generated is large.

Patent Document 1: JP-A-2010-257878

Patent Document 2: JP-A-2010-95390

Patent Document 3: JP-A-2005-228570

Summary of the Invention

An object of the invention is to provide an electrode material that can be produced at a low production cost by using a sulfide-based solid electrolyte generating a small amount of hydrogen sulfide and a positive electrode active material having a high theoretical capacity.

Another object of the invention is to provide an electrode material that can enhance the battery performance.

According to the invention, the following electrode material or the like are provided.

1. An electrode material comprising at least one of sulfur and a compound that contains a sulfur atom, a conductive material, and a solid electrolyte that contains a lithium atom, a phosphorous atom and a sulfur atom, wherein the solid electrolyte has at least one of a peak at 86.1 $\pm$ 0.6 ppm and a peak at 83.0 $\pm$ 1.0 ppm in the solid $^{31}$PNMR spectrum, and the ratio of the phosphorous atoms contained in the peak is 62 mol% or more relative to the phosphorous atoms contained in the all peaks.

2. The electrode material according to 1, wherein the solid electrolyte has at least one of a peak at 91.0 $\pm$ 0.6 ppm and a peak at 90.5 $\pm$ 0.6 ppm in the solid $^{31}$PNMR spectrum, and

the ratio of the phosphorous atoms contained in the peak is less than 15 mol% relative to the phosphorous atoms contained in the all peaks.

3. The electrode material according to 1 or 2, wherein the solid electrolyte is a lithium ion conductive inorganic solid electrolyte represented by the formula (1):

$$Li_a M_b P_c S_d, \qquad (1)$$

wherein in the formula (1), M is an element selected from B, Zn, Si, Cu and Ga; and

a, b, c, and d are a composition ratio of each element and a:b:c:d satisfies 1 to 12:0 to 0.2:1:0 to 9.

4. The electrode material according to 3, wherein in the formula (1), b is 0 and the ratio of a, c and d (a:c:d) is 1 to 9:1:3:to 7.

5. The electrode material according to any of 1 to 4, wherein the conductive material is porous carbon.

6. The electrode material according to 5, wherein the sulfur and the porous carbon are composited.

7. The electrode material according to any of 1 to 6, wherein, in a lithium battery having a three-layer structure of: a solid electrolyte layer that is obtained by putting 50 mg of a glass ceramics solid electrolyte having a $Li_7P_3S_{11}$ structure in a stainless-made mold having a diameter of 10 mm, followed by pressure molding; a positive electrode obtained by putting 7.2 mg of the electrode material according to any of 1 to 6 on the solid electrolyte layer, followed by pressure molding; and a negative electrode that comprises indium foil (thickness: 0.3 mm, diameter: 9.5 mm) and lithium foil (thickness: 0.2 mm, diameter: 9.5 mm) on the solid electrolyte layer on the side opposite to the positive electrode,

the discharge capacity per sulfur as a result of conducting a constant current charge-discharge test at a discharge current density of 0.500 mA/cm$^2$, a potential range of charge and discharge of 0.5 to 2.2 V and a charge and discharge temperature of 25°C is 1000 mAh/g or more.

8. The electrode material according to any of 1 to 7, wherein, in a lithium battery having a three-layer structure of: a solid electrolyte layer that is obtained by putting 50 mg of a glass ceramics solid electrolyte having a $Li_7P_3S_{11}$ structure in a stainless-made mold having a diameter of 10 mm, followed by pressure molding; a positive electrode obtained by putting 7.2 mg of the electrode material according to any of claims 1 to 6 on the solid electrolyte layer, followed by pressure molding; and a negative electrode that comprises indium foil (thickness: 0.3 mm, diameter: 9.5 mm) and lithium foil (thickness: 0.2 mm, diameter: 9.5 mm) on the solid electrolyte layer on the side opposite to the positive electrode,

the ratio of the discharge capacity at the 30th discharge relative to the discharge capacity at the first discharge is 80% or more when a constant current charge-discharge test is repeated at a charge-discharge current density of 0.500 mA/cm$^2$, a potential range of charge and discharge of 0.5 to 2.2 V and a charge and discharge temperature of 25°C.

9. An electrode comprising the electrode material according to any of 1 to 8.

10. An electrode produced by using the electrode material according to any of 1 to 8.

11. A lithium ion battery comprising the electrode according to 9 or 10 and an electrolyte layer comprising a solid electrolyte.

According to the invention, an electrode material that can be produced at a low production cost and by using a sulfur-based solid electrolyte generating a small amount of hydrogen sulfide and a positive electrode active material having a high theoretical capacity can be provided.

Brief Description of the Drawings

FIG. 1 shows the result of measurement of the solid $^{31}$PNMR of the positive electrode material of Example 1;

FIG. 2 shows the result of measurement of the solid $^{31}$PNMR of the positive electrode material of Example 2;

FIG. 3 shows the result of measurement of the solid $^{31}$PNMR of the positive electrode material of Comparative Example 1; and

FIG. 4 is a view showing the result of measurement of the solid $^{31}$PNMR of the positive electrode material of Comparative Example 2.

Mode for Carrying out the Invention

[Electrode material]

The electrode material of the invention is an electrode material that contains at least one of sulfur and a compound that contains a sulfur atom, a conductive material, and a solid electrolyte that contains a lithium atom, a phosphorous atom and a sulfur atom.

In the electrode material of the invention, the solid electrolyte in the electrode material has at least one of a peak at 86.1 $\pm$ 0.6 ppm and a peak 83.0 $\pm$ 1.0 ppm in the solid $^{31}$PNMR spectrum, and the ratio of the phosphorous atoms contained in the peak is 62 mol% or more relative to the phosphorous atoms contained in the all peaks.

The ratio of the phosphorus atoms that generate peaks at 86.1 $\pm$ 0.6 ppm and 83.0 $\pm$ 1.0 ppm means the ratio of phosphorous atoms contained in specific peaks relative to the total amount of phosphorous atoms measured by the solid $^{31}$PNMR spectrum. The "all peaks" means all peaks each having a peak intensity that is 3% or more relative to the maximum peak intensity.

The solid electrolyte in the electrode material having at least one of a peak at 86.1 $\pm$ 0.6 ppm and a peak at 83.0 $\pm$ 1.0 ppm means the solid electrolyte has a $PS_4^{3-}$ structure.

Further, it is supposed that the phosphor atoms contained in 86.1 $\pm$ 0.6 ppm and 83.0 $\pm$ 1.0 ppm account for 62 mol% or more relative to phosphorous atoms contained in all peaks means that the $PS_4^{3-}$ structure accounts for 62 mol% relative to the entire structure. The ratio of the phosphorous atoms contained in the peaks at 86.1 $\pm$ 0.6ppm and 83.0 $\pm$ 1.0ppm is preferably 65 mol% or more, more preferably 70 mol% or more.

Although no specific restrictions are imposed, the upper limit is normally 99 mol% or less.

In the electrode material of the invention, the solid electrolyte comprising a lithium atom, a phosphorous atom and a sulfur atom has a $PS_4^{3-}$ structure, and the $PS_4^{3-}$ structure accounts for 62 mol% or more of the entire structure. As a result, the electrode material can exhibit a high ionic conductivity and hardly undergoes hydrolysis.

In addition, if the electrode material of the invention is produced by using the above-mentioned solid electrolyte as the raw material of the electrode material of the invention, the structure undergoes only a small degree of change.

In the electrode material of the invention, it is preferred that the solid electrolyte comprise a lithium atom, a phosphorous atom and a sulfur atom has at least one of a peak at least at 91.0 $\pm$ 0.6 ppm and a peak at 90.5 $\pm$ 0.6 ppm, and the ratio of the phosphorous atoms contained in the peak is less than 20 mol% relative to the phosphorous atoms contained in the all peaks. Having at least one of a peak at 91.0 $\pm$ 0.6 ppm and a peak at 90.5 $\pm$ 0.6 ppm means the electrode material has a $P_2S_7^{4-}$ structure.

The ratio of phosphorous atoms contained in peaks at 91.0 $\pm$ 0.6 ppm and 90.5 $\pm$ 0.6 ppm is more preferably less than 18 mol%, further preferably less than 15 mol%.

Although no specific restrictions are imposed, the lower limit is normally 1 mol% or more.

In the electrode material of the invention, the amount ratio of L (a sulfur simple body and/or a compound comprising a sulfur atom), M (a conductive material) and N (solid electrode comprising a lithium atom, a phosphorous atom and a sulfur atom) is preferably L:M:N = 0.4 to 165:0.1 to 76:10 (weight ratio), more preferably L:M:N = 3 to 19:1 to 12:10 (weight ratio) and further preferably L:M:N = 3 to 16:1.5 to 13:10 (weight ratio).

In the meantime, L is the total weight of a sulfur simple body and a compound comprising a sulfur atom, M is the total weight of a conductive material and N is the total weight of a solid electrolyte comprising a lithium atom, a phosphor atom and a sulfur atom.

If the electrode material of the invention comprises the solid electrolyte in an amount exceeding the above-mentioned range, the charge and discharge capacity per mass of an electrode may become small. On the other hand, if the amount of the solid electrolyte is smaller than the above-mentioned range, the ion conductivity may be lowered.

If the electrode material of the invention comprises the conductive material in an amount exceeding the above-mentioned range, the electric capacity may be decreased. On the other hand, if the amount of the conductive material is smaller than the above-mentioned range, the electric resistance may become high.

Hereinbelow, an explanation will be given on each constituent material of the electrode material of the invention.

[Sulfur and a compound comprising a sulfur atom]

No specific restrictions are imposed on the sulfur contained in the electrode material of the invention. The sulfur is preferably a sulfur simple body having a purity of 95% or more, more preferably a sulfur simple body having a purity of 96% or more, and particularly preferably a sulfur simple body having a purity of 97% or more.

If the purity of sulfur is less than 95%, it may cause irreversible capacity.

As the crystal-form of the sulfur simple body, $\alpha$-sulfur crystals (orthorhombus), $\beta$-sulfur crystals, $\gamma$-sulfur crystals, amorphous sulfur or the like can be given. These can be used singly or in combination of two or more.

The compound comprising a sulfur atom is the so-called active material which can be used in a lithium ion battery as the electrode material. As examples thereof, $Li_2S$, $Li_2S_2$, $Li_2S_4$, $Li_2S_8$ or the like can be given.

It suffices that the electrode material of the invention include at least one of sulfur and a compound comprising a sulfur atom. There are three cases; i.e. a case where it contains only a sulfur simple body, a case where it contains only a compound comprising a sulfur atom and a case where it contains both a sulfur simple body and a compound comprising a sulfur atom.

In these cases, two or more of simple bodies of sulfur may be included and two or more of compounds containing a sulfur atom may be included.

[Conductive material]

The conductive material is a material having an electric conductivity of $1.0 \times 10^3$ S/m or more, preferably $1.0 \times 10^4$ S/m or more, with $1.0 \times 10^5$ S/m being more preferable.

It is preferred that the conductive material have fine pores. Due to the presence of fine pores, sulfur or a sulfur-based compound can be included in the fine pores. As a result, a contact area in which sulfur or the like and a conductive material are brought into contact with each other can be increased, and at the same time, the specific surface area of sulfur or the like can be increased.

No specific restrictions are imposed on the shape of the conductive material, and they may be particulate conductive material, plate-like conductive material, or a bar-like conductive material. For example, as the plate-like conductive material, grapheme can be given. As the bar-like conductive material, carbon nanotube or the like can be given. As the particulate conductive materials, ketjenblack or activated coal having a large surface area, a large pore volume and a high electronic conductivity can be given.

As the conductive material, carbon, metal powders, metal compounds or the like can be given. Carbon can be preferably given. If the electrode material of the invention contains carbon as the conductive material, since carbon has a high conductivity and is light in weight, it is possible to obtain a battery having a high energy density par mass.

The conductive material is more preferably a porous carbon having fine pores.

As the porous carbon that is a conductive material, carbon black such as ketjenblack, acetylene black, denka black, thermal black and channel black; and carbon such as graphite, carbon fibers, activated carbon or the like can be given. They may be used alone or in combination of two or more.

It is preferred that the conductive material have fine pores, and that the pore volume of the conductive material be 0.5 cc/g or more and 4.0 cc/g or less. The pore volume is preferably 0.6 cc/g or more and 3.95 cc/g or less, with 0.75 cc/g or more and 3.9 cc/g or less being particularly preferable. It is preferred that the conductive material have fine pores and the fine pores have an average pore diameter of 100 nm or less. The average fine diameter is more preferably 1 nm or more and 100 nm or less, further preferably 1 nm or more and 18 nm or less, and most preferably 2 nm or more and 17 nm or less.

Due to the presence of fine pores, the conductive material can be composited with sulfur and/or a compound that contains a sulfur atom, whereby the electron conductance of the electrode material can be enhanced.

If the pore volume of the conductive material is less than 0.5 cc/g, the content of the sulfur-based compound inside the conductive material may become small, whereby it may become difficult to obtain a lithium ion battery having a high electric capacity. On the other hand, if the pore volume of the conductive material exceeds 4.0 cc/g, the electron conductance may not be fully ensured even if it is composited with a sulfur-based compound.

If the average diameter of the fine pores of the conductive material is less than 1 nm, it may become difficult to impregnate the fine pores with the sulfur-based compound. On the other hand, if the average diameter of the fine pores of the conductive material exceeds 100 nm, the sulfur-based compound impregnated in the fine pores may not fully function as an active material.

If the conductive material is porous carbon, the porous carbon preferably has a BET specific surface area of 200 $m^2$/g or more and 4500 $m^2$/g or less when the average diameter of the fine pores is small (1 to 15 nm). If the average diameter of fine pores is large (15 to 18 nm), the BET specific surface area is preferably 100 $m^2$/g or more and 2500 $m^2$/g or less.

For example, in order that a sulfur-porous carbon composite obtained by compositizing sulfur and porous carbon have a large contact area with the solid electrolyte, it is preferred that the specific surface area of the porous carbon be large. If the specific surface area of porous carbon is too large, the average diameter of the fine pores becomes small, and hence, it is hard to incorporate the sulfur in the fine pores. If the specific surface area of the porous carbon is small, the average diameter of the fine pores becomes large, whereby incorporation of sulfur is facilitated. However, the particle size of the sulfur incorporated becomes large, the sulfur incorporated in the fine pores may not fully function as the active material. Accordingly, it is more preferred that the BET specific surface area of the porous carbon be 450 $m^2$/g or more and 4500 $m^2$/or less when the average diameter of the fine pores is small (1 to 15 nm). A BET specific surface area of 650 $m^2$/g or more and 4000 $m^2$/g or less is particularly preferable. If the average diameter of the fine pores is large (15 to 18 nm), the BET specific surface area is more preferably 400 $m^2$/g or more and 2000 $m^2$g/or less, with 600 $m^2$/g or

more and 1800 m$^2$g/or less being particularly preferable.

The BET specific surface area, the average diameter of fine pores, the pore volume and the average diameter of fine pores of the conductive material can be measured by the following method. Hereinbelow, an explanation will be made taking, as an example, a case where the conductive material is porous carbon. The following measurement method is not limited to a case where the conductive material is porous carbon.

The BET specific surface area, the diameter of fine pores, the pore volume and the average diameter of fine pores can be obtained by using an adsorption isothermal curve of a nitrogen gas that is obtained by allowing porous carbon to absorb a nitrogen gas at a temperature of liquid nitrogen.

Specifically, by using an adsorption isothermal curve of a nitrogen gas, the specific surface area can be obtained by the Brenauer-Emmet-Telle (BET) method. Further, by using an adsorption isothermal curve of a nitrogen gas (absorption side), the average diameter of fine pores and the pore volume can be obtained by the Barret-Joyner-Halenda (BJH) method. Further, the average diameter of fine pores can be calculated from the total pore volume and the BET specific surface area with an assumption that the pore structure has a cylindrical shape.

As for the measurement apparatus, measurement can be conducted by means of a specific surface area/pore distribution measurement apparatus (Autosorb-3) manufactured by Qantacrome Instruments. As the pre-treatment of the measurement, a vacuum discharge with heating at 200°C for 3 hours or the like can be given, for example.

[Composite of a sulfur-based compound and a conductive material]

At least one of the sulfur and the compound containing a sulfur atom (sulfur-based compound) and a conductive material contained in the electrode material of the invention are preferably contained as a composite of a sulfur-based compound and a conductive material. The "composite of a sulfur-based compound and a conductive material" means one in which sulfur and/or a compound comprising a sulfur atom are deposited on the surface of a conductive material; one in which sulfur and/or a compound comprising a sulfur atom are dissolved, and the solution is allowed to contact with the surface of the conductive material, followed by solidification; and one in which a compound comprising a sulfur atom is synthesized in the presence of a conductive material, followed by integration. For example, one obtained by integrating sulfur and/or a compound comprising a sulfur atom with a conductive material by a physical treatment such as mechanical milling is not included.

In the meantime, the surface of the conductive material includes the surface of the pores if the conductive material has fine pores.

In the composite of a sulfur-based compound and a conductive material in which a sulfur-based compound and a conductive material are compositized, the content of a sulfur-based compound is 5 to 90 wt%, for example, preferably 40 to 90 wt%, more preferably 50 to 80 wt%.

The porosity "εr" of the composite of a sulfur-based compound and a conductive material is, taking the elastic recovery into consideration, in respect of the balance of moldability and battery performance, preferably 0.005 to 0.15, more preferably 0.01 to 0.1, and particularly preferably 0.01 to 0.05 of the composite of a sulfur-based compound and porous carbon.

As for the method for producing a composite of a sulfur-based compound and a conductive material, a method in which a sulfur-based compound and a conductive material are mixed by means of various mills such as a ball mill such as a planetary ball mill, a tumbling roll mill, a vibration roll mill or the like; a vertical roll mill such as a ring roller mill; a high-speed rotating mill such as a hammer mill, a cage mill and a stream-like mill such as a jet mill. In addition to these methods, a method in which a mixture of a sulfur-based compound and a conductive material is heated at a temperature that is equal to or higher than the melting point of the sulfur-based compound.

Among these production methods, a method in which mixing is conducted by means of a planetary ball mill or a method in which a mixture of a sulfur-based compound and a conductive material is heated at a temperature that is equal to or higher than the melting point of a sulfur-based compound is preferable.

When a composite of a sulfur-based compound and a conductive material is produced by heating a mixture of a sulfur-based compound and a conductive material at a temperature that is equal to or higher than the melting point of the sulfur-based compound, the heating may be conducted in an inert gas or in air. The pressure at the time of heating is from normal pressure to 5 MPa, for example, preferably from normal pressure to 1 MPa, and more preferably from normal pressure to 0.9 MPa. The normal pressure means atmospheric pressure, and means a pressure that is around 101325 Pa.

It suffices that the heating temperature be equal to or higher than the melting point of a sulfur-based compound, but is preferably 112°C to 440°C. The heating holding time is 1 minute to 48 hours, for example, preferably 10 minutes to 12 hours, with 15 minutes to 10 hours being more preferable.

[Solid electrolyte]

The solid electrolyte contained in the electrode material of the invention is a sulfide-based solid electrolyte that contains a lithium atom, a phosphorous atom and a sulfur atom. For example, it can be produced from lithium sulfide and phosphorous pentasulfide, or lithium sulfide, a simple body of phosphorous and a simple body of sulfur. In addition, it can be produced from raw materials such as lithium sulfide, phosphorous pentasulfide, a simple body of phosphorus and/or a simple body of sulfur.

The sulfide-based solid electrolyte may be a sulfide-based solid electrolyte that is further subjected to a fire-proof treatment.

The solid electrolyte may be glass, glass ceramics, or a mixture of glass and glass ceramics. The mixture of glass and glass ceramics means glass and glass ceramics are intermixed in a single particle. The above-mentioned plurality of solid electrolytes may be present in the electrode material of the invention or only one solid electrolyte may be present in the electrode material of the invention.

The shape of the solid electrolyte is not particularly restricted, and the solid electrolyte may be in the form of a particle, a plate or a bar.

The solid electrolyte of the electrode material of the invention is preferably a lithium ion conductive inorganic solid electrolyte represented by the following formula (1):

$$Li_a M_b P_c S_d \qquad (1)$$

wherein in the formula (1), M is an element selected from B, Zn, Si, Cu or Ga.

a, b, c, and d are a composition ratio of each element and a:b:c:d satisfies 1 to 12:0 to 0.2:1:0 to 9. b is preferably 0. It is more preferred that b be 0 and the ratio of a, c and d (a:c:d) be 1 to 9:1:3:to 7. It is further preferred that b be 0, and that a:c:d be 2 to 4.5:1:3.5 to 5.

The composition ratio of each element can be controlled by adjusting the amount of the raw material compound when producing the solid electrolyte.

The sulfide-based solid electrolyte that is a lithium ion conductive inorganic solid electrolyte represented by the formula (1) can be produced from raw materials such as lithium sulfide, phosphorous pentasulfide, a simple body of phosphorus and/or a simple body of sulfur.

Although no specific restrictions are imposed on the lithium sulfide, and one that is commercially available can be used, lithium oxide of high purity is preferable.

The high-purity lithium sulfide is preferably lithium sulfide having a total content of lithium salts of a sulfur oxide of 0.15 mass% or less. More preferably, the high-purity lithium sulfide is lithium sulfide having a total content of a lithium salt of a sulfur oxide 0.1 mass% or less. Further, it is preferred that the high-purity lithium sulfide be lithium sulfide having a content of N-methylaminobutyric acid lithium salt of 0.15 mass% or less. More preferably, the high-purity lithium sulfide is lithium sulfide having a content of N-methylaminobutyric acid lithium salt of 0.1 mass% or less.

If the total content of a lithium salt of a sulfur oxide is 0.15 mass% or less, a solid electrolyte obtained by the melt quenching or the mechanical milling becomes a glassy electrolyte (totally amorphous). On the other hand, if the total content of a lithium salt of a sulfur oxide exceeds 0.15 mass%, the resulting electrolyte may be crystalline from the beginning. This crystallized product has a low ionic conductivity. Further, if this crystallized product is subjected to a heat treatment, the crystallized product may not be changed, and a highly ionically conductive sulfide-based solid electrolyte may not be obtained.

Further, if the amount of N-methylaminobutyric acid lithium salt is 0.15 mass% or less, a deteriorated product of N-methylaminobutyric acid lithium salt may not deteriorate the cycle performance of a lithium ion battery. By using lithium sulfide of which the amount of impurities is decreased, a highly ionically conductive electrolyte can be obtained.

No specific restrictions are imposed on the method for producing lithium sulfide as long as it is a method capable of reducing the amount of the impurities. For example, it can be obtained by purifying lithium sulfide produced by the following methods a to c. The method a or b is particularly preferable among the following production methods.

　　a. a method in which lithium hydroxide and hydrogen sulfide are reacted in a non-protonic organic solvent at 0 to 150°C to generate lithium hydrosulfide, and the reaction liquid is subjected to dehydrosulfurization at 150 to 200°C (see JP-A-H07-330312);
　　b. a method in which lithium hydroxide and hydrogen sulfide are reacted in a non-protonic organic solvent at 150 to 200°C, whereby lithium sulfide is directly formed (JP-A-H07-330312)
　　c. a method in which lithium hydroxide and a gaseous sulfur source are reacted at a temperature of 130 to 445°C (JP-A-H09-283156).

No specific restrictions are imposed on the method for purifying lithium sulfide obtained by the above method.

As a preferable method for purification, a purification method stated in WO2005/40039 or the like can be given. Specifically, lithium sulfide obtained by the above-mentioned method is washed at a temperature of 100°C or higher by using an organic solvent.

The organic solvent used in washing is preferably a non-protonic polar solvent. Further, it is more preferred that the non-protonic organic solvent used for the production of lithium sulfide and the non-protonic polar organic solvent used for washing be the same.

As the non-protonic polar organic solvent that is preferably used for washing, a non-protonic polar organic compound such as an amide compound, a lactam compound, a urea compound, an organic sulfur compound and a cyclic organic phosphorous compound can be given, for example. They can be used as a single solvent or as a mixed solvent. In particular, N-methyl-2-pyrrolidone (NMP) is selected as an excellent solvent.

No specific restrictions are imposed on the amount of an organic solvent used for washing. Although the frequency of the washing is not particularly restricted, washing is preferably conducted twice or more. Washing is preferably conducted in an inert gas such as nitrogen and argon.

By drying the thus washed lithium sulfide at a temperature that is equal to or higher than the boiling point of the organic solvent used for washing under a stream of an inert gas such as nitrogen under normal pressure or under reduced pressure for 5 minutes or longer, preferably about 2 to 3 hours or longer, lithium sulfide used in the invention can be obtained.

No specific restrictions are imposed on phosphorus pentasulfide ($P_2S_5$) as long as it is produced and sold on the industrial basis. Further, instead of $P_2S_5$, a simple body of phosphorous (P) and a simple body of sulfur (S) having a corresponding molar ratio can be used. A simple body of phosphorous (P) and a simple body of sulfur (S) can be used without particular restrictions as long as they are produced and sold on the industrial basis.

The mixing molar ratio of lithium sulfide, phosphorous pentasulfide or a simple body of phosphorous and a simple body of sulfur is normally 50:50 to 85:15, preferably 60:40 to 80:20, with $Li_2S:P_2S_5$ being 68:32 to 78:22 (molar ratio) being particularly preferable.

As the method for producing a sulfide-based glass solid electrolyte, melt quenching method or mechanical milling method (MM method) can be given.

In the production by melt quenching method, predetermined amounts of $P_2S_5$ and $Li_2S$ are mixed in a mortar to obtain a pellet-like mixture. The mixture is then put in a carbon-coated quartz tube and vacuum-sealed. After allowing the mixture to react at a predetermined reaction temperature, the mixture is quenched by putting in ice, whereby a sulfide-based glass solid electrolyte can be obtained.

The reaction temperature in this case is preferably 400°C to 1000°C, more preferably 800°C to 900°C. The reaction time is preferably 0.1 hour to 12 hours, more preferably 1 to 12 hours.

The quenching temperature of the above-mentioned reaction product is normally 10°C or less, preferably 0°C or less. The cooling rate is normally about 1 to 10000 K/sec, preferably 10 to 10000 K/sec.

If a sulfide-based glass solid electrolyte is produced by the MM method, predetermined amounts of $P_2S_5$ and $Li_2S$ are mixed in a mortar, and the mixture is then allowed to react for a prescribed period of time by means of various ball mills, for example, whereby a sulfide-based glass solid electrolyte can be obtained.

In the MM method using the above-mentioned raw materials, the reaction can be conducted at room temperature. Therefore, there is an advantage that thermal decomposition of the raw materials hardly occurs, whereby a glass solid electrolyte having the composition at the time of preparation can be obtained. The MM method has an advantage that the glass solid electrolyte can be finely pulverized simultaneously with the production thereof.

In the MM method, various methods such as a rotation ball mill, a tumbling ball mill, a vibration ball mill and a planetary ball mill or the like can be used.

As for the conditions for the MM method, if a planetary ball mill is used, for example, the treatment may be conducted at a rotation speed of several tens to several hundred rotations per minute for a treatment time of 0.5 to 100 hours.

The specific examples of the production method of a sulfide-based glass solid electrolyte by the melt quenching method and the MM method are explained hereinabove. The production conditions such as temperature conditions and processing time can be appropriately adjusted by the equipment used, or the like.

Thereafter, by subjecting the resulting sulfide-based glass solid electrolyte to a heat treatment at a prescribed temperature according to need, a sulfide-based crystallized glass (glass ceramics) solid electrolyte can be formed.

The heat treatment temperature at which the sulfide-based crystallized glass solid electrolyte is formed is preferably 180°C to 330°C, more preferably 200°C to 320°C, and particularly preferably 210°C to 310°C.

The heat treatment time is preferably 3 to 240 hours when the heat treatment is conducted at 180°C or higher and 210°C or lower, with 4 to 230 hours being particularly preferable. When the heat treatment is conducted at a temperature higher than 210°C and 330°C or lower, the heat treatment time is preferably 0.1 to 240 hours, particularly preferably 0.2 to 235 hours, with 0.3 to 230 hours being further preferable.

[Other components]

The electrode material of the invention may comprise a sulfur-based compound, a conductive material, and a solid electrolyte comprising a lithium atom, a phosphorous atom and a sulfur atom. The electrode material may consist essentially of these components or may comprise only these components.

In the invention, the "consist essentially of" means that the content of a sulfur-based compound, a conductive material and a solid electrolyte comprising a lithium atom, a phosphorous atom and a sulfur atom is 90 wt% or more, 95 wt% or more, 97 wt% or more, 98 wt% or more or 99 wt% or more.

The electrode material of the invention may further comprise a binder resin, various additives or the like in a range that does not impair the advantageous effects of the invention.

[Method for producing an electrode material]

The electrode material of the invention can be produced by, for example, mixing at least one of sulfur and a compound comprising a sulfur atom (sulfur-based compound), a conductive material and a solid electrolyte comprising a lithium atom, a phosphorous atom and a sulfur atom.

When mixing them, it is preferred that the sulfur-based compound and the conductive material be a composite of a sulfur-based compound and a conductive material. The mixing ratio is as mentioned above.

As for the mixing method, mixing that is conducted by a kneader; a ball mill such as a planetary ball mill, a tumbling ball mill and a vibratory ball mill; a vertical roller mill such as a ring roller mill; a high-speed rotation mill such as a hammer mill and a cage mill; and a stream mill such as a jet mill, wet mixing such as mixing by using a Filmix, dry mixing by using mechano-fusion or the like can be given. Preferably, mixing is conducted by means of a mill.

The mixing time is 10 minutes to 100 hours, for example, preferably 30 minutes to 72 hours, more preferably 1 hour to 50 hours.

Mixing is preferably conducted in an atmosphere of an inert gas having a dew point of -60°C or less (nitrogen, argon or the like) or in an atmosphere of a dry air.

In addition to the above, if mixing is conducted by means of a mill, the rotation speed is 100 rpm to 750 rpm, for example, preferably 150 rpm to 600 rpm, with 200 rpm to 500 rpm being more preferable.

[Electrode]

The electrode material of the invention can preferably be used as the material of the electrode. The electrode material can be used particularly preferably as the material for a positive electrode. By using the electrode material of the invention, the theoretical capacity of a battery can be enhanced.

It suffices that the electrode of the invention comprise the electrode material of the invention. The electrode of the invention may consisit only of the electrode material. Further, in addition to the electrode material, the electrode of the invention may comprise a conductive aid, a binder, other solid electrolytes or the like.

A known conductive aid may be used. For example, the same conductive material as that for a composite electrode material can be used.

If the electrode comprises a conductive aid, the content of the conductive aid in the electrode is preferably 0.01 mass% or more and 90 mass% or less, more preferably 0.01 mass% or more and 50 mass% or less.

If the content of a conductive aid is too large, the electric capacity may become small. If the amount of a conductive aid is small (or is not contained), the electric resistance may be increased.

A known binder may be used.

If the electrode comprises a binder, the content of a binder in the electrode is preferably 0.01 mass% or more and 90 mass% or less, more preferably 0.01 mass% or more and 10 mass% or less.

If the content of a binder is too large, the electric capacity may become small. If the amount of a binder is small (or is not contained), the binding mey be weak.

As the solid electrolyte, in addition to the solid electrolyte contained in the electrode material of the invention, a polymer-based solid electrolyte and an oxide-based solid electrolyte can be given.

(1) Polymer-based solid electrolyte

As the polymer-based solid electrolyte, a material that can be used as a polymer electrolyte such as a fluorine resin disclosed in JP-A-2010-262860, polyethylene oxide, polyacrylonitrile, polyacrylate, derivatives thereof, and copolymers thereof can be given.

As the fluorine resin, a resin comprising vinylidene fluoride (VdF), hexafluoropropylene (HFP), tetrafluoroethylene (TFE) and resins comprising these derivatives or the like as structural units can be given. As specific examples, homopolymers such as vinylidene polyfluoride (PVdF), polyhexafluoropropylene (PHFP) and polytetrafluoroethylene (PTFE), secondary copolymers or tertiary copolymers such as a copolymer of VdF and HFP (hereinafter, this copolymer is referred to as "P(VdF-HFP)") can be given.

(2) Oxide-based solid electrolyte

As an oxide-based solid electrolyte, LiN and LISICONs, Thio-LISICONs, $LiTi_2P_3O_{12}$ having a NASICON structure, electrolytes obtained by further crystallizing these; and crystals having a Perovskite structure such as $La_{0.55}Li_{0.35}TiO_3$ can be used.

[Method for producing an electrode]

The electrode of the invention can be formed by a method in which the electrode material of the invention is subjected to press molding by a common method, and the molded product is processed into a sheet-like electrode. For example, the solid electrolyte of the electrode material, that may be a glass-like solid electrolyte, and the glass-like solid electrolyte may be pressed while heating at a temperature that is equal to or higher than the glass transition temperature, thereby to allow part of or entire glass-like solid electrolyte to be fused with each other, or while heating at a temperature that is equal to or higher than the crystallization temperature, thereby to allow part of or entire the glass-like solid electrolyte be glass ceramics to form an electrode.

When the ionic conductivity of the glass ceramics solid electrolyte is higher as compared with the glass-like solid electrolyte, it is preferred that the glass-like solid electrolyte be allowed to be glass ceramics.

If part of or entire glass-like solid electrolyte is fused, the interfacial resistance between the glass-like solid electrolyte particles may be decreased.

Further, a method can be given in which the electrode material of the invention is formed on a current collector in the form of a film, whereby an electrode is formed. As the method for forming a film, an aerosol deposition method, a screen printing method, a cold spray method or the like can be given. In addition, a method in which the electrode material is dispersed or partially dissolved in a solvent to form a slurry and the slurry is then applied. If necessary, a binder may be mixed.

As the above-mentioned current collector, a plate-like, foil-like or mesh-like collector formed of stainless steel, gold, platinum, copper, zinc, nickel, tin, aluminum or alloys thereof can be given.

When used as an electrode layer, the thickness of a layer, the layer thickness may be selected appropriately according to the battery design.

[Lithium battery]

In the lithium battery of the invention, it suffices that at least one of the positive electrode layer or the negative electrode layer be the electrode of the invention; for example, it may be a stacked body in which the negative electrode layer, the solid electrolyte layer and the positive electrode layer are stacked in this sequence. The lithium battery may further have a current collector.

The solid electrolyte layer is a layer comprising the above-mentioned solid electrolyte, and is preferably a layer in which solid electrolyte particles are fused with each other. The "fused" means that part of the solid electrolyte particles are dissolved and the dissolved part is composited with other solid electrolyte particles. Further, the solid electrolyte layer may be a plate-like body of a solid electrolyte and the plate-like solid electrolyte layer includes a case where part or all of the solid electrolyte particles is dissolved and bound with each other to be a plate-like body.

The thickness of the solid electrolyte layer is preferably 0.001 mm or more and 1 mm or less.

The lithium ion battery of the invention can be produced by a known method, and can be produced by a coating method, an electrostatic method (electrostatic spray method, electrostatic screen method), or the like.

The lithium ion battery of the invention is a battery that has excellent discharge capacity and the capacity retaining ratio.

For example, it is preferred that the lithium ion battery of the invention have a discharge capacity per sulfur at the initial (1st) discharge after conducting a constant current charge-discharge test at a current density of 0.500 mA/cm², a potential range of charge and discharge of 0.5 to 2.2 V at a charge and discharge temperature of 25°C of 1000 mAh/g or more, more preferably 1200 mAh/g or more, further preferably 1300 mAh/g or more and most preferably 1400 mAh/g or more.

The discharge capacity per sulfur at the 30th discharge after conducting the above-mentioned constant current charge-discharge test is preferably 1000 mAh/g or more, more preferably 1100 mAh/g or more, further preferably 1200 mAh/g or more, most preferably 1250 mAh/g or more.

Although no specific restrictions are imposed on the upper limit, the discharge capacity is normally 1672 mAh/g or less (theoretical capacity of sulfur).

The lithium battery of the invention has particularly excellent capacity retaining ratio. For example, if the 1st discharge capacity after conducting the above-mentioned charge and discharge test is taken as Y[mAh/g] and the 30th discharge capacity after conducting the above-mentioned charge and discharge test is taken as X[mAh/g], the capacity retaining ratio [%] is expressed as $100 \times X/Y$. The capacity retaining ratio is preferably 80% or more, more preferably 82% or more, further preferably 83% or more, with 85% or more being most preferable.

The upper limit is not particularly restricted, but normally 100% or less.

A lithium ion battery obtained by using the electrode material of the invention can exhibit the above-mentioned performance (discharge capacity and capacity retaining ratio) when a lithium ion battery is produced by the following production method. The lithium ion battery is not limited to a lithium ion battery that is produced by the following production method.

(1) Method for producing a battery

50 mg of glass ceramics having a $Li_7P_3S_{11}$ structure obtained by the method mentioned later is put in a stainless-made mold having a diameter of 10 mm. After flattening (after allowing the layer thickness of the electrolyte layer to be uniform), pressure molding is conducted by applying a pressure of 10 MPa (indicated value) from the upper surface of the electrolyte layer by means of a hydraulic pressing machine (P-6) manufactured by Riken Corporation.

Subsequently, 7.2 mg of the electrode material of the invention is put to the upper surface of the electrolyte layer. After flattening (after allowing the layer thickness of the positive electrolyte layer to be uniform), pressure molding is conducted by applying a pressure of 22 MPa from the upper surface of the positive electrode layer by means of a hydraulic pressing machine (P-6) manufactured by Riken Corporation.

On the side of the electrolyte layer opposite to the positive electrode, indium foil (thickness: 0.3 mm, diameter: 9.5 mm), lithium foil (thickness: 0.2 mm, diameter: 9.5 mm) and titanium foil (thickness: 0.02 mm, diameter: 10 mm) are placed. At this time, the foils are placed such that the electrolyte layer, the indium foil, the lithium foil and the titanium foil are stacked in this sequence.

Subsequently, by means of a hydraulic pressing machine (P-6) manufactured by Riken, Japan, pressure molding is conducted by applying a pressure of 8 MPa from the upper surface of the titanium foil.

Subsequently, on the surface opposite to the surface which contacted with the electrolyte layer of the positive electrode layer, titanium foil (thickness: 0.02 mm, the diameter: 10 mm) is put.

(2) Method for producing an electrolyte

As glass ceramics having a $Li_7P_3S_{11}$ structure, glass ceramics produced by the following method is used.

(i) Production of lithium sulfide ($Li_2S$)

Lithium sulfide is produced by the method according to the first aspect (two-process method) of JP-A-H07-330312. Specifically, in a 10 l-autoclave provided with a stirring blade, 3326.4g (33.6 mol) of N-methyl-2-pyrrolidone (NMP) and 287.4g (12 mol) of lithium hydroxide are charged, and the resultant is stirred at 300 rpm and heated to 130°C. After heating, hydrogen sulfide is blown to the liquid at a supply speed of 3 l/min for 2 hours.

Subsequently, the reaction liquid is heated under a nitrogen stream (200 cc/min), and part of the reacted hydrogen is hydrodesulfurized. As the temperature is elevated, water generated as a side product due to the reaction of the hydrogen sulfide and lithium hydroxide starts to evaporate. The water is concentrated by means of a condenser and taken out of the reaction system. Simultaneously with the distillation off of the water outside the system, the temperature of the reaction liquid is elevated. When the temperature reaches 180°C, the temperature elevation stops, and the reaction liquid is kept at a constant temperature. After the completion of the hydrodesulfurization reaction (about 80 minutes), the reaction is completed, whereby lithium sulfide is obtained.

(ii) Purification of lithium sulfide

The 500-mL slurry reaction solution (NMP-lithium sulfide slurry) obtained in the above-mentioned (i) was subjected to decantation, 100 mL of dehydrated NMP is added thereto. Then, the mixture is stirred at 105°C for about one hour. With the temperature being maintained, NMP was subjected to decantation. Further, 100 mL of NMP is added and stirred at 105°C for about one hour, and NMP is subjected to decantation with the temperature being maintained. The same operation is repeated 4 times in total. After the completion of the decantation, lithium sulfide is dried under nitrogen stream, at 230°C (a temperature that is equal to or higher than the boiling point of NMP), under ordinary pressure for 3 hours. The content of impurities of the purified lithium sulfide obtained is measured.

The content of each of sulfur oxides of lithium sulfite ($Li_2SO_3$), lithium sulfate ($Li_2SO_4$) and thiosulfuric acid dilithium salt ($Li_2S_2O_3$) and N-methylaminobutyric acid lithium salt (LMAB) are quantitatively determined by the ion chromatography method. The total contents of the sulfur oxides is 0.13% by mass, for example, and the content of N-methylaminobutyric acid lithium salt (LMAB) is 0.07 % by mass.

(iii) Production of glass

$Li_2S$ of (ii) and $P_2S_5$ (manufactured by Sigma-Aldrich Co., LLC.) are used as starting materials. About 1g of a mixture obtained by mixing them such that the molar ratio becomes 70:30 and 10 alumina balls each having a diameter of 10 mm are placed in a 45 ml-alumina container. The mixture is subjected to a mechanical milling treatment by means of a planetary ball mill (Model: P-7, manufactured by Fritsch) in nitrogen at room temperature (25°C) at a rotation speed of 370 rpm for 20 hours to obtain a lithium-phosphorus based sulfide glass solid electrolyte as white-yellow powder. The glass-transition temperature of the solid electrolyte obtained is determined to be 220°C by DSC (differential scanning calorimetry).

(iv) Crystallization

The solid electrolyte glass particles obtained in (iii) above is sealed in a SUS-made tube in a glove box in the atmosphere of Ar. The solid electrolyte glass particles are then heated at 300°C for 2 hours, thereby to obtain electrolyte glass ceramics (sulfide-based solid electrolyte: average particle diameter: 14.52 $\mu$m). In the X-ray diffraction measurement of the glass ceramics particles, a peak is observed at $2\theta$=17.8, 18.2, 19.8, 21.8, 23.8, 25.9, 29.5 and 30.0 deg (each peak may be shifted within a range of $\pm$ 0.3 deg).

The ionic conductivity of the glass ceramics particles is $1.3 \times 10^{-3}$ S/cm, for example. The ionic conductivity can be calculated from the results obtained by the alternating current impedance method.

EXAMPLES

Production Example 1

(1) Production of Lithium Sulfide ($Li_2S$)

Lithium sulfide was produced according to the method of the first aspect (two-step method) described in JP-A-H07-330312. Specifically, it was produced as shown below. 3326.4g (33.6 mol) of N-methyl-2-pyrrolidone (NMP) and 287.4g (12 mol) of lithium hydroxide were charged in a 10 liter-autoclave provided with a stirring blade, and heated to 130°C at 300 rpm. After heating, hydrogen sulfide was blown to the resulting liquid at a supply rate of 3 liter/min for 2 hours.

Subsequently, this reaction liquid was heated under nitrogen stream (200cc/min) to hydrodesulfurize a part of reacted hydrogen sulfide. With an elevation in temperature, water generated as a side product due to the reaction of the above-mentioned hydrogen sulfide and lithium hydroxide began to evaporate. The evaporated water was condensed using a condenser and removed to the outside of the system. The temperature of the reaction liquid rose while water was distilled away out of the system. Heating was stopped at the point where the temperature reached 180°C to maintain the reaction liquid at a certain temperature. After the completion of hydrodesulfurization (about 80 minutes), the reaction was completed to obtain lithium sulfide.

(2) Purification of Lithium Sulfide

After NMP in the 500-mL slurry reaction solution (NMP-lithium sulfide slurry) obtained in the above-mentioned (1) was subjected to decantation, 100 mL of dehydrated NMP was added thereto. Then, the mixture was stirred at 105°C for about one hour. With the temperature being maintained, NMP was subjected to decantation. Further, 100 mL of NMP was added and stirred at 105°C for about one hour, and NMP was subjected to decantation with the temperature being maintained. The same operation was repeated 4 times in total. After the completion of the decantation, lithium sulfide was dried under a nitrogen stream, at 230°C (a temperature that is equal to or higher than the boiling point of NMP), under ordinary pressure for 3 hours to obtain purified lithium sulfide.

The impurity content of the purified lithium sulfide obtained was measured by means of ion chromatography. The total content of sulfur oxides of lithium sulfite ($Li_2SO_3$), lithium sulfate ($Li_2SO_4$) and lithium thiosulfate ($Li_2S_2O_3$) was 0.13% by mass, and the content of N-methylaminobutyric acid lithium salt (LMAB) was 0.07% by mass.

(3) Preparation of Solid Electrolyte having a molar ratio of $Li_2S:P_2S_5=70:30$

$Li_2S$ and $P_2S_5$ (manufactured by Sigma-Aldrich Co. LLC.) produced above were mixed such that the molar ratio became 70:30. About 1g of the mixture obtained was placed in a 45 mL-alumina container together with 10 alumina balls each having a diameter of 10 mm. The container was then sealed.

The sealed alumina container was subjected to mechanical milling in nitrogen at room temperature (25°C) at a rotation speed of 370 rpm for 20 hours by means of a planetary ball mill (P-7, manufactured by Fritsch) to obtain a lithium-phosphorus-based sulfide glass solid electrolyte as white-yellow powder. The yield was 83%.

The glass transition temperature of the solid electrolyte glass particle obtained was determined to be 220°C by DSC (differential scanning calorimetry). As a result of X-ray diffraction measurement (CuKα:λ=1.5418Å) of the solid electrolyte glass particle, no peak for $Li_2S$ as a raw material appeared, and a halo pattern due to the solid electrolyte glass was observed.

The solid electrolyte glass particles were encapsulated and sealed in a tube made of SUS in argon atmosphere in a glove box. A heat treatment was conducted at 300°C for 2 hours to obtain electrolyte glass ceramics (sulfide-based solid electrolyte: average particle size 14.52 μm) having a molar ratio of $Li_2S:P_2S_5=70:30$. In an X-ray diffraction measurement for this glass ceramics particle, peaks were observed at 2θ=17.8, 18.2, 19.8, 21.8, 23.8, 25.9, 29.5 and 30.0 deg.

The ion conductivity of this glass ceramics particle was $1.3 \times 10^{-3}$S/cm. The ion conductivity was calculated from the result obtained by the alternating current impedance method.

Production Example 2

Solid electrolyte glass particles (average particle size: 68 μm) were produced in the same manner as in Production Example 1, except that $Li_2S$ and $P_2S_5$ (manufactured by Sigma-Aldrich Co. LLC.) were mixed such that the molar ratio became 75:25 and the heat treatment at 300°C for 2 hours was not conducted.

Meanwhile, the recovery rate of the solid electrolyte glass particles was 82%. As a result of X-ray diffraction measurement (CuKα:λ=1.5418Å) of the solid electrolyte glass particles, no peak for $Li_2S$ as a raw material appeared, and a halo pattern due to the solid electrolyte glass was observed. The ion conductivity of the glass particles obtained was $0.3 \times 10^{-3}$ S/cm.

Example 1

[Preparation of Electrode Material (Positive Electrode Material)]

0.400g of sulfur (manufactured by Sigma-Aldrich Co. LLC., purity: 99.998%) and 0.400g of porous carbon (ketjenblack (KB) EC600JD, manufactured by Lion Corporation) were mixed in a mortar. After that, the resulting mixture was put in a sealable stainless container and then subjected to a heat treatment in an electric furnace to obtain a composite of sulfur and porous carbon.

The heat treatment was conducted as follows. The container was heated from room temperature to 150°C at 10°C/min and kept at 150°C for 6 hours. Subsequently, it was heated to 300°C at 10°C/min and kept at 300°C for 2.75 hours, and then naturally-cooled.

0.5g of the composite of sulfur and porous carbon and 0.5g of sulfide-based solid electrolyte powder prepared in Production Example 2 were put in a mill pot, and subjected to mechanical milling in argon at room temperature (25°C) at a rotation speed of 370 rpm for 5 hours by means of a planetary ball mill (P-7, manufactured by Fritsch) to obtain a positive electrode material.

For the positive electrode material obtained, solid-state $^{31}$PNMR spectrum measurement was conducted under the following conditions:

Apparatus: JNM-CMXP302NMR manufactured by JEOL Ltd.
Observed nucleus: $^{31}$P
Observed frequency: 121.339 MHz
Measurement temperature: room temperature
Measurement method: MAS method
Pulse sequence: single pulse
90° pulse width: 4μs
Magic Angle Spinning: 8600Hz
Waiting time until next pulse application after FID measurement: 100 to 2000s (set so as to be 5 times or more of the maximum spin-lattice relaxation time)
Number of integration: 64

Meanwhile, in the above-mentioned solid-state $^{31}$PNMR spectrum measurement, the chemical shift was determined by using $(NH_4)_2HPO_4$ (chemical shift: 1.33 ppm) as an external reference. Moreover, in order to prevent the change of properties due to the presence of moisture during charging a sample, the sample was charged in a sealable sample tube in a dry box to which dry nitrogen was continuously fed.

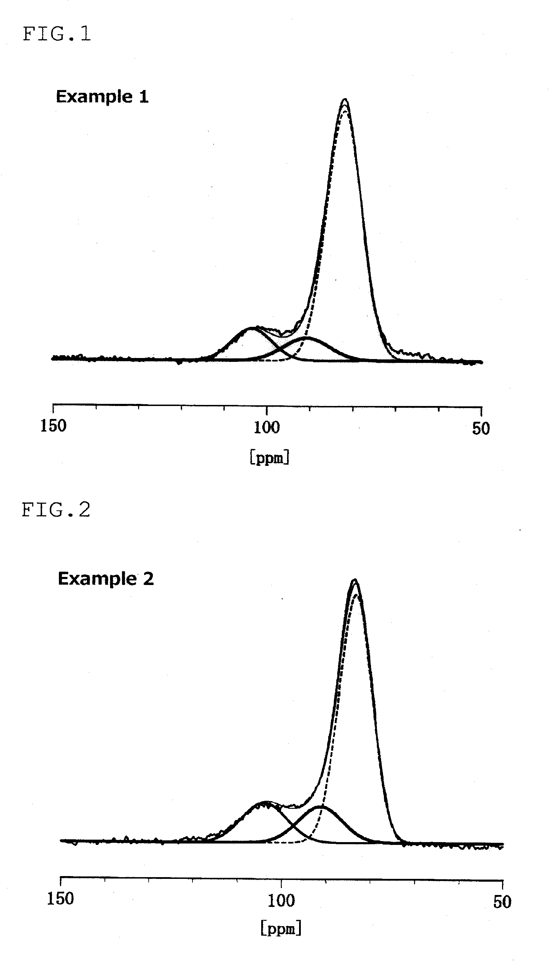

For the solid-state $^{31}$PNMR spectrum obtained by measuring the sample under the above-mentioned conditions, resonance lines which are observed in the range of 70 to 120 ppm shown in Table 1 are separated to 6 Gaussian curves using the non-linear least-squares method to calculate the ratio of phosphorus from the area ratio of each of the curves. In addition, the results of the waveform separation are shown in FIG. 1.

Specifically, the area ratios for peaks 1 to 6 shown in Table 1 are set two be $I_{104}$, $I_{91.0}$, $I_{90.5}$, $I_{86.1}$, $I_{83.0}$ and $I_{98.1}$, respectively. The ratio ($x_p$) of phosphorus attributed to each peak to P in an entire solid electrolyte was calculated as bellow. The results are shown in Table 2.

$$x_p[\%]=100 \times (I_{83.0}+I_{86.1})/(I_{83.0}+I_{86.1}+I_{90.5}+I_{91.0}+I_{98.1}+I_{104})$$

As shown in Table 2, the solid electrolyte in a positive electrode material in Example 1 has a peak at $83.0\pm1.0$ ppm attributed to $PS_4^{3-}$ (glass) (corresponding to peak 5 in Table 1). Thus, the ratio of phosphorus atoms contained in the peak is 78.7 mol% relative to the amount of phosphorus atoms contained in all peaks (corresponding to $PS_4^{3-}$ (total)).

Meanwhile, the solid electrolyte in a positive electrode material in Comparative Example, which will be described later, has a peak at $86.1\pm0.6$ ppm belonging to $PS_4^{3-}$ (crystal) and a peak (corresponding to peak 5 in Table 1) at $83.0\pm1.0$ ppm attributed to $PS_4^{3-}$ (glass). However, the ratio of phosphorous atoms contained in these peaks is 54.9 mol% (corresponding to $PS_4^{3-}$ (total)) relative to the phosphorous atoms contained in all peaks.

Table 1

|  | Position of peak [ppm] | Width of line [Hz] | Attribution |
|---|---|---|---|
| Peak 1 | $104\pm0.6$ | 800Hz-2000Hz | $P_2S_6^{4-}$ (glass) |
| Peak 2 | $91.0\pm0.6$ | 800Hz-2000Hz | $P_2S_7^{4-}$ (glass) |
| Peak 3 | $90.5\pm0.6$ | 200Hz-500Hz | $P_2S_7^{4-}$ (crystal) |
| Peak 4 | $86.1\pm0.6$ | 200Hz-500Hz | $PS_4^{3-}$ (crystal) |
| Peak 5 | $83.0\pm1.0$ | 800Hz-2000Hz | $PS_4^{3-}$ (glass) |
| Peak 6 | $98.1\pm0.6$ | 800Hz-2000Hz | unknown |

[Production of Lithium Ion Battery]

50 mg of the sulfide-based solid electrolyte prepared in Production Example 1 was put in a stainless mold having a diameter of 10 mm. After flattening such that the layer thicknesses to be uniform, pressing was conducted by applying a pressure of 10 MPa (indicated value) from above by means of a hydraulic pressing machine (P-6, produced by Riken Corporation) to form an electrolyte layer. Next, 7.2 mg of the prepared positive electrode material was put on the upper surface of the electrolyte layer and flattened so as to allow the layer thickness to be even. Then, pressing was conducted by applying a pressure of 22MPa (indicated value) from above by means of a hydraulic pressing machine (P-6, produced by Riken Corporation) to form a positive electrode layer.

On the surface opposite to the positive electrode layer of the electrolyte layer, indium foil (thickness: 0.3 mm, diameter: 9.5 mm), lithium foil (thickness: 0.2 mm, diameter: 9.5 mm) and titanium foil (thickness: 0.02 mm, diameter: 10 mm) were put such as the electrolyte layer, the indium foil, the lithium foil and the titanium foil were stacked in this sequence. Pressing was conducted by applying a pressure of 8 MPa from above the top of the titanium foil by means of a hydraulic pressing machine (P-6, produced by Riken Corporation) to form a negative electrode layer.

On the surface opposite to the surface which contacted with the electrolyte layer of the positive electrode layer, titanium foil (thickness: 0.02 mm, diameter: 10 mm) was put to produce a lithium-ion battery having a three-layer structure of a positive electrode layer, a solid electrolyte layer and a negative electrode layer (titanium foil is a current collector).

For the lithium-ion battery produced, a constant current charge-discharge test was conducted at a charge-discharge current density of 0.500 mA/cm$^2$, at a charge-discharge voltage of 0.5 to 2.2V, and at a charge-discharge temperature of 25°C. A discharge capacity which the battery can discharge after a first charge was measured (1st discharge capacity). Similarly, a discharge capacity which the battery can discharge after repeating the cycle of this charging and discharging 30 times (30th discharge capacity) was also measured. The results of the discharge capacities are shown in Table 3.

Example 2

A positive electrode material was produced and evaluated in the same manner as in Example 1, except that activated carbon (MSC30, manufactured by Kansai Coke and Chemicals Co., Ltd.) was used instead of porous carbon (ketjenblack) to produce and evaluate a lithium-ion battery. The results are shown in Table 2 and 3. In addition, the measurement result of solid $^{31}$PNMR is shown in FIG. 2.

Comparative Example 1

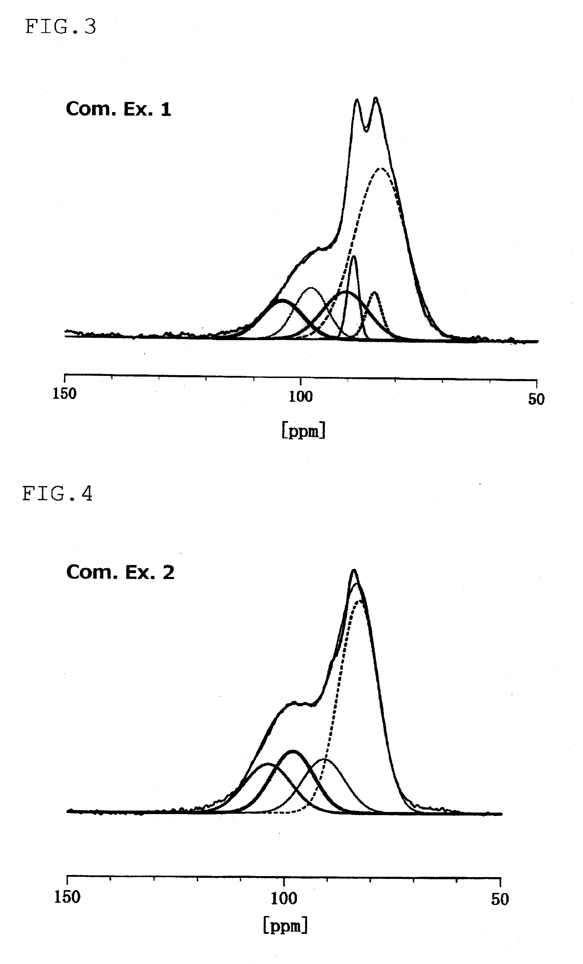

A positive electrode material was produced and evaluated in the same manner as in Example 1, except that the sulfide-based solid electrolyte powder prepared in Production Example 1 was used instead of the sulfide-based solid electrolyte powder prepared in Production Example 2 to produce and evaluate a lithium-ion battery. The results are shown in Table 2 and 3. In addition, the measurement result of solid $^{31}$PNMR is shown in FIG.3.

Comparative Example 2

A positive electrode material was produced and evaluated in the same manner as in Example 2, except that the sulfide-based solid electrolyte powder prepared in Production Example 1 was used instead of the sulfide-based solid electrolyte powder prepared in Production Example 2 to produce and evaluate a lithium-ion battery. The results are shown in Table 2 and 3. In addition, the measurement result of solid $^{31}$PNMR is shown in FIG.4.

Table 2

|  | Example 1 | Example 2 | Com. Ex. 1 | Com. Ex. 2 |
|---|---|---|---|---|
| Xc | 0.0 | 0.0 | 11.1 | 0.0 |
| $P_2S_6^{4-}$(glass) | 11.2 | 15.0 | 10.1 | 14.4 |
| $P_2S_7^{4-}$(glass) | 10.1 | 14.4 | 13.5 | 14.6 |
| $P_2S_7^{4-}$(crystal) | 0.0 | 0.0 | 5.9 | 0.0 |
| $PS_4^{3-}$(crystal) | 0.0 | 0.0 | 5.2 | 0.0 |
| $PS_4^{3-}$(glass) | 78.7 | 70.6 | 54.9 | 54.2 |
| $P_2S_7^{4-}$(total) | 10.1 | 14.4 | 19.4 | 14.6 |
| $PS_4^{3-}$(total) | 78.7 | 70.6 | 60.1 | 54.2 |
| Unknown(98.1ppm) | 0.0 | 0.0 | 10.4 | 16.8 |
| All values are indicated in terms of [mol%]. | | | | |

Table 3

|  | Positive electrode material | | Solid electrolyte | 1st discharge capacity [mAh/g-S) | 30th discharge capacity [mAh/g-S] | Capacity retaining ratio [%] |
|---|---|---|---|---|---|---|
|  | Sulfur-conductive material composite | | | | | |
| Example 1 | S (35 wt%) | KB (15wt%) | Production Ex.2 (50 wt%) | 1474 | 1341 | 91 |
| Example 2 | S (35 wt%) | MSC30 (15wt%) | Production Ex.2 (50 wt%) | 1484 | 1280 | 86.3 |
| Com. Ex. 1 | S (35 wt%) | KB (15wt%) | Production Ex.1 (50 wt%) | 1667 | 1373 | 79.8 |

(continued)

| | Positive electrode material | | | 1st discharge capacity [mAh/g-S) | 30th discharge capacity [mAh/g-S] | Capacity retaining ratio [%] |
|---|---|---|---|---|---|---|
| | Sulfur-conductive material composite | | Solid electrolyte | | | |
| Com. Ex. 2 | S (35 wt%) | MSC30 (15wt%) | Production Ex.1 (50wt%) | 1654 | 1343 | 81.2 |
| KB: Ketjenblack MSC30: Activated carbon | | | | | | |

INDUSTRIAL APPLICABILITY

The electrode material of the invention is suited for a positive electrode in a lithium-ion battery. The lithium-ion battery of the invention can be used as a battery for a mobile terminal, a mobile electronic device, a mobile compact power storage unit, a motorcycle using a motor as a power source, an electric automobile, a hybrid electric vehicle or the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the Japanese patent applications claiming the priority under the Paris Convention to the invention are incorporated herein by reference in its entirety.

**Claims**

1.  An electrode material comprising at least one of sulfur and a compound that contains a sulfur atom, a conductive material, and a solid electrolyte that contains a lithium atom, a phosphorous atom and a sulfur atom, wherein
the solid electrolyte has at least one of a peak at 86.1 $\pm$ 0.6 ppm and a peak at 83.0 $\pm$ 1.0 ppm in the solid $^{31}$PNMR spectrum, and
the ratio of the phosphorous atoms contained in the peak is 62 mol% or more relative to the phosphorous atoms contained in the all peaks.

2.  The electrode material according to claim 1, wherein the solid electrolyte has at least at one of a peak at 91.0 $\pm$ 0.6 ppm and a peak at 90.5 $\pm$ 0,6 ppm in the solid $^{31}$PNMR spectrum, and
the ratio of the phosphorous atoms contained in the peak is less than 15 mol% relative to the phosphorous atoms contained in the all peaks.

3.  The electrode material according to claim 1 or 2, wherein the solid electrolyte is a lithium ion conductive inorganic solid electrolyte represented by the formula (1):

$$Li_aM_bP_cS_d \qquad (1)$$

wherein in the formula (1), M is an element selected from B, Zn, Si, Cu and Ga; and
a, b, c, and d are a composition ratio of each element and a:b:c:d satisfies 1 to 12:0 to 0.2:1:0 to 9.

4.  The electrode material according to claim 3, wherein in the formula (1), b is 0 and the ratio of a, c and d (a:c:d) is 1 to 9:1:3:to 7.

5.  The electrode material according to any of claims 1 to 4, wherein the conductive material is porous carbon.

6.  The electrode material according to claim 5, wherein the sulfur and the porous carbon are composited.

7.  The electrode material according to any of claims 1 to 6, wherein, in a lithium battery having a three-layer structure of: a solid electrolyte layer that is obtained by putting 50 mg of a glass ceramics solid electrolyte having a $Li_7P_3S_{11}$ structure in a stainless-made mold having a diameter of 10 mm, followed by pressure molding; a positive electrode obtained by putting 7.2 mg of the electrode material according to any of claims 1 to 6 on the solid electrolyte layer, followed by pressure molding; and a negative electrode that comprises indium foil (thickness: 0.3 mm, diameter: 9.5 mm) and lithium foil (thickness: 0.2 mm, diameter: 9.5 mm) on the solid electrolyte layer on the side opposite to the positive electrode,

the discharge capacity per sulfur as a result of conducting a constant current charge-discharge test at a discharge current density of 0.500 mA/cm$^2$, a potential range of charge and discharge of 0.5 to 2.2 V and a charge and discharge temperature of 25°C is 1000 mAh/g or more.

8. The electrode material according to any of claims 1 to 7, wherein, in a lithium battery having a three-layer structure of: a solid electrolyte layer that is obtained by putting 50 mg of a glass ceramics solid electrolyte having a $Li_7P_3S_{11}$ structure in a stainless-made mold having a diameter of 10 mm, followed by pressure molding; a positive electrode obtained by putting 7.2 mg of the electrode material according to any of claims 1 to 6 on the solid electrolyte layer, followed by pressure molding; and a negative electrode that comprises indium foil (thickness: 0.3 mm, diameter: 9.5 mm) and lithium foil (thickness: 0.2 mm, diameter: 9.5 mm) on the solid electrolyte layer on the side opposite to the positive electrode,

the ratio of the discharge capacity at the 30th discharge relative to the discharge capacity at the first discharge is 80% or more when a constant current charge-discharge test is repeated at a charge-discharge current density of 0.500 mA/cm$^2$, a potential range of charge and discharge of 0.5 to 2.2 V and a charge and discharge temperature of 25°C.

9. An electrode comprising the electrode material according to any of claims 1 to 8.

10. An electrode produced by using the electrode material according to any of claims 1 to 8.

11. A lithium ion battery comprising the electrode according to claim 9 or 10 and an electrolyte layer comprising a solid electrolyte.

FIG.1

**Example 1**

FIG.2

**Example 2**

FIG.3

**Com. Ex. 1**

150            100            50

[ppm]

FIG.4

**Com. Ex. 2**

150            100            50

[ppm]

**EP 2 784 849 A1**

<table>
<tr><td colspan="2">INTERNATIONAL SEARCH REPORT</td><td>International application No.<br>PCT/JP2012/007408</td></tr>
</table>

A. CLASSIFICATION OF SUBJECT MATTER
*H01M4/38*(2006.01)i, *H01M4/36*(2006.01)i, *H01M10/052*(2010.01)i, *H01M10/0562*
(2010.01)i

According to International Patent Classification (IPC) or to both national classification and IPC

B. FIELDS SEARCHED

Minimum documentation searched (classification system followed by classification symbols)
H01M4/38, H01M4/36, H01M10/052, H01M10/0562

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho  1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-181260 A  (Osaka Prefecture University),<br>15 September 2011 (15.09.2011),<br>claims 1 to 5; paragraphs [0011] to [0029];<br>fig. 4<br>(Family: none) | 1-11<br>5-11 |
| Y | JP 2010-95390 A  (Tokyo Institute of Technology),<br>30 April 2010 (30.04.2010),<br>claims 1 to 8; fig. 3<br>(Family: none) | 5-11 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
    12 February, 2013 (12.02.13)

Date of mailing of the international search report
    26 February, 2013 (26.02.13)

Name and mailing address of the ISA/
    Japanese Patent Office

Facsimile No.

Authorized officer

Telephone No.

Form PCT/ISA/210 (second sheet) (July 2009)

20

EP 2 784 849 A1

**INTERNATIONAL SEARCH REPORT**

International application No.

PCT/JP2012/007408

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-228289 A  (Osaka Municipal Technical Research Institute, Osaka Prefecture University), 10 November 2011 (10.11.2011), entire text (Family: none) | 1-11 |
| P,A | JP 2012-151096 A  (Idemitsu Kosan Co., Ltd.), 09 August 2012 (09.08.2012), entire text (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010257878 A
- JP 2010095390 A
- JP 2005228570 A
- JP H07330312 A
- JP H09283156 A
- WO 200540039 A
- JP 2010262860 A